Europäisches Patentamt

European Patent Office

Office européen des brevets

(11) Publication number: **0 350 459**
**A2**

(19)

(12) **EUROPEAN PATENT APPLICATION**

(21) Application number: 89830284.9

(22) Date of filing: 20.06.89

(51) Int. Cl.⁵: **A 61 C 1/00**
**A 61 L 2/00**

(30) Priority: 06.07.88 IT 352988    26.10.88 IT 363888

(43) Date of publication of application:
10.01.90   Bulletin  90/02

(84) Designated Contracting States:
CH DE ES FR GB GR LI SE

(71) Applicant: **CASTELLINI S.p.A.**
**Via Saliceto, 22**
**I-40013 Castelmaggiore (Bologna)  (IT)**

(72) Inventor: **Castellini, Franco**
**Via Bellinzona, 60**
**I-40135 Bologna  (IT)**

(74) Representative: **Lanzoni, Luciano**
**c/o BUGNION S.p.A. Via Farini, 37**
**I-40124 Bologna  (IT)**

(54) A unit for the sterilization of operating fluids applicable to medical equipment, in particular to dental surgery instruments.

(57) The sterilization unit is designed for installation upstream of dental surgery apparatus, and comprises a set of mechanical filters (2) located in series on the compressed air supply line (12) to the apparatus, at least one of which guaranteeing low permeability and ensuring absolute filtration of pathogenic particle sizes, and a further set of filters (3) on the water supply line (11) similar in all respects to the air filters; the option also exists of treating the water supply with at least one ultraviolet device (3), instead of filters, in which case the supply line (11) will be fashioned in a material transparent to ultraviolet radiation so that the unsterilized water can be fully exposed to the emitted rays.

## Description

## A unit for the sterilization of operating fluids applicable to medical equipment, in particular to dental surgery apparatus

The present invention relates to a unit for use in conjunction with medical equipment, dental surgery apparatus in particular, which serves to sterilize the fluids utilized in operation of such apparatus. In the art field embracing systems and devices for the sterilization and/or disinfection of medical equipment, and in particular, of dental surgery apparatus, attention has always been given first and foremost to the treatment of the instruments or handpieces and relative fluid supply lines forming part of such apparatus, though without ever taking account of the aseptic state of the actual fluids flowing through these lines, namely air and water. Persons skilled in the art know that the difference between sterilization and simple disinfection is purely a matter of duration, and accordingly, in the interests of simplicity, reference is made throughout the specification to full sterilization only, thus tacitly including the simpler step of disinfection.

Conventionally, the handpieces of dental surgery apparatus are supplied with air drawn in from the surrounding atmosphere by a compressor and with water from the domestic main, both untreated. As regards the air supply, in particular, air drawn into the compressor undergoes a purification of sorts, inasmuch as pollutant substances traceable to the compressor itself, i.e. oil and moisture, are filtered out; this, however, represents a step taken by the manufacturer of the compressor aimed not so much at cleansing the air supply in order to safeguard the health of the patient, as at ensuring the elimination of pollutant substances that might damage components downstream of the compressor, in particular the handpieces of the apparatus.

As far as regards the water supply, sterilization is in no way contemplated, since its potability is naturally assumed.

In medical treatment generally, frequent use is made of water to clean wounds occasioned during the course of surgery, a typical instance being that of dental surgery; given however that a major route of infection, the oral cavity, is directly exposed to the water in such situations, the supply must be not only potable, but also entirely free of any pathogenic or pyrogenic substances. In particular, such substances consist in complex polysaccharides formed by the action of bacteria, always present in water, which are able to withstand the chloride based chemical disinfectants conventionally used, and to render the human organism feverish.

Whilst it is true that equipment does exist for the express purpose of sterilizing water supplied to medical apparatus, which operates by introducing germicidal and oxidizing agents into the supply (electrochemically), or by other comparable means, such systems are rarely adopted in practice.

Of the conventional expedients in question, none is able to sterilize water without the use of an added substance; moreover, given that such a substance must necessarily come into contact with the major routes of bodily infection when mingled with water, high doses or percentages must be avoided at all costs in order to avoid possible complications in the health of the patient, for example poisoning.

As regards the air supply, there are currently no measures adopted for its sterilization; neither are there suitable devices designed for the purpose that might be utilized in conjunction with surgery apparatus.

Accordingly, the object of the present invention is to enable sterilization of the fluids supplied to medical surgery apparatus, and to do so without the use of additional substances, thereby eliminating the drawbacks mentioned above.

The stated object is achieved with a sterilization unit as characterized in the appended claims; such a unit is designed for installation upstream of surgery apparatus and provided with a plurality of physico-mechanical type filter elements for the treatment of unsterilized air, located along the relative supply line, at least one of which ensures low permeability and absolute filtration capacity in respect of particle sizes at least smaller than the pathogens carried in the air, and with at least one element for treatment of the unsterilized water which is capable of emitting ultraviolet rays and directing them at the relative supply line, the line itself being embodied in material transparent to such rays.

The option also exists of installing a plurality of physico-mechanical type filter elements in series along the water supply line, rather than the UV emitter, at least one of which guaranteeing low permeability and absolute filtration capacity in respect of particle sizes at least smaller than the pathogens carried in the water supply.

A first advantage of the present invention consists essentially in the fact that it can be associated with both new and existing apparatus without any particular problems of installation, given that the unit is simply installed on the relative fluid supply lines.

Another advantage of the unit according to the invention is that it can be utilized in conjunction with more than one apparatus, installed upstream and with the downstream apparatus connected in parallel one with another.

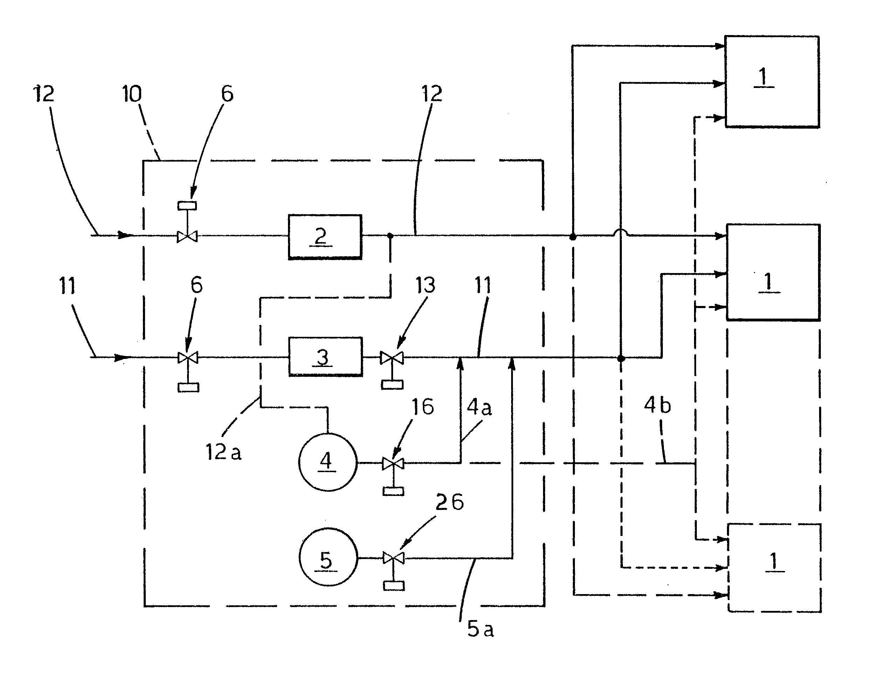

The invention will now be described in detail by way of example with the aid of the accompanying drawing, which is a circuit diagram of the unit.

With reference to the drawing, the sterilization unit according to the invention is illustrated in a typical embodiment, that is to say, an independent unit for installation upstream of one or more items of medical equipment, in particular dental surgery apparatus, which are denoted 1. Each such apparatus is connected with lines 11 and 12 through which fluids, water and air respectively, are supplied to the relative instruments.

The unit, denoted 10 in its entirety, comprises a plurality of filters located in series along the air supply line 12, which is controlled by shut-off means 6 installed upstream of the filters.

The single filter element, denoted 2 and indicated schematically by a rectangle in the drawing, is of physico-mechanical design, consisting preferably in a pair of suitable paper elements; accordingly, no substances need be added to the fluid. At least one such filter ensures low permeability and is capable of absolute filtration down to particle dimensions at least smaller (e.g. <0.20 ... 0.25μm) than those of pathogenic matter carried in the air, whereas the remainder serve to remove coarser pollutant particles.

For a more thorough sterilization, the absolute filtration capacity of at least one filter 2 may be such as to trap particle sizes at least smaller than those of pyrogens (0.01μm approx).

According to the invention, the water line 11 is made to pass through means, denoted 3, by which it is invested with ultraviolet rays; more exactly, the supply line 11, or at least that part of the line which passes through the means 3, is embodied in a material transparent to UV radiation (Teflon, for example) so that the ultraviolet rays can reach the structure of the water unobstructed.

Thus, no chemical or other substances are added to the water; instead, energy is transmitted to the fluid through the walls of the supply line 11 in the form of ultraviolet radiation, of prescribed wavelength, capable of denaturing the nucleic acid which forms the essential constituent of bacterium and virus cells.

In an alternative embodiment of the sterilization unit according to the invention, means 3 installed on the water supply line 11 may also consist in physico-mechanical filters preferably comprising a pair of suitable paper elements, of which at least one will be a low permeability type capable of absolute filtration down to particle dimensions at least smaller than those of pathogens in the water (e.g. <0.20 ... 0.25μm), the remainder serving to remove coarser pollutant particles.

For a more thorough sterilization, the absolute filtration capacity of at least one filter 3 may be such as to trap particle sizes at least smaller than those of pyrogens (0.01um approx).

The unit 10 may also comprise means 4 by which to distribute a physiological solution through a respective line 4a into the water supply line 11 at a point downstream of the relative UV-emitting or filtration elements 3, in which case the supply line 11 will be controlled by shut-off means 13 located between the UV/filtration elements 3 and the junction with the solution line 4a, and this same line 4a controlled by relative shut-off means denoted 16. Alternatively, means 4 of distributing the physiological solution might be made to serve separate lines 4b (added in phantom in the drawing) serving the water supply line 11 into each of the single apparatus 1 independently; in short, a unit embodied thus is provided with three independent outlets 11, 12 and 4b.

Similarly, the unit might also comprise means 5 for the distribution of a liquid sterilizer through a respective line 5a into the water supply line 11 at a point downstream of the UV/filtration elements 3, in which case the sterilizer line 5a will be fitted with relative shut-off means 26.

It is interesting to note that, according to the invention, where means 4 for the distribution of a physiological solution consist in a container the contents of which are emptied by the flow of fluid through an inlet, this same flow will consist in sterile air taken from the apparatus supply line 12 downstream of the respective filters 2, through a line denoted 12a.

The unit disclosed can thus form an integral part of the surgery apparatus, or provide an accessory to existing apparatus that may already have been in operation without, or again, constitute part of an auxiliary unit applicable to and serving more than one apparatus 1, as in the drawing; in the latter instance, there will be just one unit 10, installed upstream of all the apparatus.

With a unit thus embodied, air and water supplied to the connected surgery apparatus are sterilized continuously, inasmuch as pollutants of all types are filtered and removed by physical-and-mechanical means, without recourse either to the adoption of chemical substances or additives or to the use of electro-chemical type reactions. To ensure optimum filtration by the elements 2 installed on the air line 11, and of the elements 3 on the water line 12 in the event that UV radiation is not utilized, use will be made of devices that monitor the state of the filters, for example devices capable of sensing variations in pressure through the relative fluid line, so that timely replacement can be assured.

## Claims

1) A unit for the sterilization of operating fluids applicable to medical equipment, in particular to dental surgery apparatus characterized
-in that it comprises at least one plurality of physico-mechanical filter elements (2) installed upstream of the apparatus and placed in series along a line (12) through which unsterilized air is supplied to one or more such apparatus, and means (3) designed to emit ultraviolet rays, installed on and directed toward a line (11) through which unsterilized water is supplied to the apparatus;
-in that at least the part of the water supply line (11) coinciding with means (3) of emitting ultraviolet rays is embodied in a material transparent to ultraviolet radiation; and
-in that at least one of the filter elements (2) installed on the air supply line (12) ensures low permeability and absolute filtration down to particle sizes at least smaller than pathogenic.

2) A unit for the sterilization of operating fluids applicable to medical equipment, in particular to dental surgery apparatus characterized
-in that it comprises at least one plurality of physico-mechanical filter elements (3, 2) installed upstream of the apparatus and placed in series along each of the fluid lines (11, 12) through which unsterilized water and air are supplied to one or more such apparatus;

-in that at least one of the filter elements (2, 3) installed on each fluid supply line (12, 11) ensures low permeability and absolute filtration down to particle sizes at least smaller than pathogenic.

3) A sterilization unit as in claim 1 or 2, embodied as an independent structure (10) applicable to medical surgery apparatus (1) and provided with shut-off means (6) installed on the fluid supply lines (11, 12) at least upstream of the relative ultraviolet means (3) or filter elements (3, 2).

4) A sterilization unit as in claim 1, wherein at least one of the filter elements (2) installed on the air supply line (12) ensures low permeability and absolute filtration down to particle sizes at least smaller than pyrogenic.

5) A sterilization unit as in claim 2, wherein at least one of the filter elements (2, 3) installed on each fluid supply line (12, 11) ensures low permeability and absolute filtration down to particle sizes at least smaller than pyrogenic.

6) A sterilization unit as in claim 1 or 2, further comprising means (4) for the distribution of a physiological solution, connected with respective independent lines (4b) controlled by relative shut-off means (16) and directed into corresponding water supply lines (11) upstream of a plurality of medical surgery apparatus (1).

7) A sterilization unit as in claim 1, 2 or 3, further comprising means (4) for the distribution of a physiological solution, connected with a respective line (4a) controlled by relative shut-off means (16) and directed into the water supply line (11) downstream of the ultraviolet means or filter elements (3), wherein shut-off means (13) are provided between the ultraviolet means or filter elements (3) and the junction of the solution line (4a) and the water supply line (11).

8) A sterilization unit as in claim 1 or 2, further comprising means (5) for the distribution of a liquid sterilizer connected with a respective line (5a) controlled by relative shut-off means (26) and directed into the water supply line (11) downstream of the ultraviolet means or filter elements (3), wherein shut-off means (13) are provided between the ultraviolet means or filter elements (3) and the junction of the sterilizer line (5a) and the water supply line (11).

9) An independent unit for the sterilization of operating fluids applicable to medical equipment, in particular to dental surgery apparatus characterized

-in that it comprises at least one plurality of physico-mechanical filter elements (2) installed upstream of the apparatus and placed in series along a line (12) through which unsterilized air is supplied to one or more such apparatus, and means (3) designed to emit ultraviolet rays, installed on and directed toward a line (11) through which unsterilized water is supplied to the apparatus;

-in that at least the part of the water supply line (11) coinciding with means (3) of emitting ultra violet rays is embodied in a material transparent to ultraviolet radiation;

-in that at least one of the filter elements (2) installed on the air supply line (12) ensures low permeability and absolute filtration down to particle sizes at least smaller than pathogenic;

-in that shut-off means (6) are installed on the fluid supply lines (11, 12) upstream of the relative ultraviolet means (3) or filter elements (3, 2); and

-in that it comprises means (4) for distribution of a physiological solution, connected with respective independent lines (4b) controlled by relative shut-off means (16) and directed into corresponding water supply lines (11) upstream of a plurality of medical surgery apparatus (1).

10) An independent unit for the sterilization of operating fluids applicable to medical equipment, in particular to dental surgery apparatus characterized

-in that it comprises at least one plurality of physico-mechanical filter elements (2) installed upstream of the apparatus and placed in series along a line (12) through which unsterilized air is supplied to one or more such apparatus, and means (3) designed to emit ultraviolet rays, installed on and directed toward a line (11) through which unsterilized water is supplied to the apparatus;

-in that at least the part of the water supply line (11) coinciding with means (3) of emitting ultra violet rays is embodied in a material transparent to ultraviolet radiation;

in that at least one of the filter elements (2) installed on the air supply line (12) ensures low permeability and absolute filtration down to particle sizes at least smaller than pathogenic;

-in that shut-off means (6) are installed on the fluid supply lines (11, 12) upstream of the relative ultraviolet means (3) or filter elements, (3, 2); and

-in that it comprises means (4) for distribution of a physiological solution, connected with a respective line (4a) controlled by relative shut-off means (16) and directed into the water supply line (11) downstream of the ultraviolet means (3), wherein shut-off means (13) are provided between the ultraviolet means (3) and the junction of the solution line (4a) and the water supply line (11).

11) An independent unit for the sterilization of operating fluids applicable to medical equipment, in particular to dental surgery apparatus characterized

-in that it comprises at least one plurality of physico-mechanical filter elements (3, 2) installed upstream of the apparatus and placed in series along each of the fluid lines (11, 12) through which unsterilized water and air are supplied to one or more such apparatus;

-in that at least one of the filter elements (2, 3) installed on each fluid supply line (12, 11) ensures low permeability and absolute filtration down to particle sizes at least smaller than pathogenic;

-in that shut-off means (6) are installed on the fluid supply lines (11, 12) upstream of the relative filter elements (3, 2); and

-in that it comprises means (4) for distribution of a physiological solution, connected with respective independent lines (4b) controlled by relative shut-off means (16) and directed into corresponding water supply lines (11) upstream of a plurality of medical surgery apparatus (1).

12) An independent unit for the sterilization of operating fluids applicable to medical equipment, in particular to dental surgery apparatus characterized

-in that it comprises at least one plurality of physico-mechanical filter elements (3, 2) installed upstream of the apparatus and placed in series along each of the fluid lines (11, 12) through which unsterilized water and air are supplied to one or more such apparatus;

-in that at least one of the filter elements (2, 3) installed on each fluid supply line (12, 11) ensures low permeability and absolute filtration down to particle sizes at least smaller than pathogenic;

-in that shut-off means (6) are installed on the fluid supply lines (11, 12) upstream of the relative filter elements (3, 2); and

-in that it comprises means (4) for distribution of a physiological solution, connected with a respective line (4a) controlled by relative shut-off means (16) and directed into the water supply line (11) downstream of the filter elements (3), wherein shut-off means (13) are provided between the filter elements (3) and the junction of the solution line (4a) and the water supply line (11).

13) A sterilization unit as in claim 9 or 11, further comprising means (5) for the distribution of a liquid sterilizer connected with a respective line (5a) controlled by relative shut-off means (26) and directed into the water supply line (11) downstream of the ultraviolet-emitting means or filter elements (3), wherein shut-off means (13) are provided between the ultraviolet means or filter elements (3) and the junction of the sterilizer line (5a) and the water supply line (11).

14) A sterilization unit as in claim 10 or 12, further comprising means (5) for the distribution of a liquid sterilizer connected with a respective line (5a) controlled by relative shut-off means (26) and directed into the water supply line (11) downstream of the ultraviolet-emitting means or filter elements (3), and downstream of the shut-off means (13).

15) A sterilization unit as in claims 9, 10, 11 and 12, comprising means (4) for the distribution of a physiological solution that consist in a container the contents of which are removed by a flow of fluid admitted through an inlet, wherein the flow consists in sterile air taken through a relative line (12a) from the apparatus air supply line (12) at a point downstream of the relative filter elements (2).

16) A sterilization unit as in claim 1 or 2 or as in claims 9 to 12, applicable to a medical equipment, embodied as a single unit (10) located upstream of and serving a plurality of apparatus (1) installed in parallel.